# EUROPEAN PATENT APPLICATION

(11) **EP 3 679 842 A1**
(43) Date of publication of application: **15.07.2020**
(21) Application number: 19776707.2
(22) Date of filing: 26.02.2019
(51) Int. Cl.: A47J 47/16, A47J 27/00, A47J 36/36

(54) **POT STAND AND COOKING APPLIANCE**

(30) Priority: 29.03.2018 JP 2018064095
(71) Applicant: Tiger Corporation, Kadoma-shi, Osaka 571-8571 (JP)
(72) Inventor: FUKUMOTO Shinji, Kadoma-shi, Osaka 571-8571 (JP); IZUMI Shuso, Kadoma-shi, Osaka 571-8571 (JP); KOMORI Keiko, Kadoma-shi, Osaka 571-8571 (JP); NANRI Naoto, Kadoma-shi, Osaka 571-8571 (JP); KOMODA Gen, Kadoma-shi, Osaka 571-8571 (JP)
(74) Representative: TBK
(86) International application number: PCT/JP2019/007210
(87) International publication number: WO 2019/187888

(57) **Abstract**

A heat-retaining pot set (1), which is an example of a cooking appliance, includes a heat-retaining pot (2) and a pot stand (3). The heat-retaining pot (2) has a vacuum insulation structure and can keep the contents warm. The heat-retaining pot (2) according to the present embodiment can also be directly heated by a heating means such as a direct fire or an electromagnetic cooker. The pot stand (3) includes a concave portion (51) provided in the center of the opposing surface with the heat-retaining pot (2), and a contact portion (52) disposed around the concave portion (51). When the heat-retaining pot (2) is placed on the pot stand (3), the outer peripheral portion (32a) located at the lower end of the side surface portion (11) of the heat-retaining pot (2) contacts the contact portion (52) of the pot stand (3).

## Description

### [Technical Field]

The present invention relates to a pot stand for a pot having a heat insulating structure, and to a cooking appliance including the pot stand and the pot.

### [Background Art]

An outer pot (also referred to as a thermos pot) having a vacuum heat insulating structure has been commercialized for the purpose of enhancing the heat insulating property of the pot or maintaining the cooking in the pot at a constant temperature to perform heat-retaining cooking. This outer pot does not transfer heat even if heated from the outside, because the whole outer shape of the pot has a vacuum insulation structure. Therefore, an inner cooker for heating is required.

On the other hand, in a pot having a vacuum insulation structure and increasing heat insulation, it has been proposed that the bottom surface can be heated. For example, Patent Document 1 discloses an insulated cooking appliance comprising a side wall having a double structure having a vacuum space portion for heat insulation, and a bottom plate constituting a heat receiving surface provided to cover a bottom portion of the side wall. According to such an insulated cooking appliance, at the time of heating, the bottom surface of the insulated cooking appliance can be directly heated by using a direct fire or an electromagnetic cooker (IH cooker) or the like, and the bottom surface can be kept warm for a long time by being separated from the heating means.

### [Citation List]

### [Patent Literature]

[Patent Document 1] Japanese examined utility model application publication No.H1-32970

### [Summary of Invention]

### [Technical Problem]

However, in such a heat insulating cooking appliance, at the time of heat retention, there is a problem that the heat radiation advances from the bottom surface. Further, in order to improve the heat storage property of the bottom surface of the insulated cooking appliance, when the bottom surface is formed of a thick metal plate material such as clad material, even after the bottom surface is separated from the heating means, a state in which the bottom surface is hot continues for a while. Therefore, placing the bottom surface of an insulated cooking appliance immediately after heating on a table or cooking table may cause the surface of the table or cooking table to burn or deform due to high heat.

It is accordingly an object of the present invention to provide a pot stand suitable for a pot capable of heating the bottom surface. The present invention also provides a cooking appliance including such a pot stand and a pot.

### [Solution to Problem]

The pot stand according to one aspect of the present invention is a pot stand for a pot having a heat-insulating structure and a heated portion on a bottom surface. The pot stand includes a concave portion provided in the center of the opposing surface with the pot, and a contact portion with the bottom surface of the pot. The contact portion is disposed around the concave portion. The contact portion is provided at least partially around the concave portion.

The pot stand according to the one aspect of the present invention may further include an outer wall portion disposed on the outer periphery of the opposing surface with the pot.

In the pot stand according to the above aspect of the present invention, the contact portion may be provided on the entire outer periphery of the concave portion.

Yet another aspect of the present invention relates to a cooking appliance including a pot stand according to one aspect of the present invention and a pot having a heat-insulating structure.

In this cooking appliance, it is preferable that a heated portion is provided on the bottom surface of the pot, and when the pot is placed on the pot stand, the contact portion of the pot is in contact with the bottom surface of the pot at a position other than the heated portion. In the cooking appliance, on the bottom surface of the pot, a groove may be formed around the heated portion.

### [Advantageous Effects of Invention]

As described above, the pot stand according to one aspect of the present invention has the concave portion and the contact portion with the bottom surface of the pot arranged around the concave portion. According to this configuration, when the pot is placed on the pot stand, a part of the bottom surface of the pot comes into contact with the contact portion of the pot stand. Thus, the air heat insulating layer is formed by the bottom surface of the pot and the concave portion of the pot stand, it is possible to suppress the heat radiation from the heated portion of the pot. Therefore, according to one aspect of the present invention, a pot stand suitable for a pot having a heat insulating structure and a heatable bottom surface can be provided. In addition, according to the cooking appliance of one aspect of the present invention, it is possible to improve the heat retention performance of the pot after heating is finished.

### [Brief Description of Drawings]

FIG. 1 is a cross-sectional view showing the internal configuration of the heat-retaining pot set according to First embodiment.
FIG. 2 is a cross-sectional view showing an enlarged bottom surface of the heat-retaining pot set shown in FIG. 2.
FIG. 3 is a cross-sectional view showing a further enlarged side portion of the bottom surface portion of the heat-retaining pot set shown in FIG. 2.
FIG. 4 is a perspective view showing an appearance of a pot stand of a heat-retaining set according to the First embodiment.
FIG. 5 is a perspective view showing an appearance of a pot stand of a heat-retaining pot set according to Second embodiment.
FIG. 6 is a cross-sectional schematic view showing a side portion of the bottom surface portion of a heat-retaining pot set according to Third embodiment.
FIG. 7 is a cross-sectional view showing the internal configuration of a heat-retaining pot of a heat-retaining pot set according to Fourth embodiment.
FIG. 8 is a graph showing the results of Example.

### [Description of Embodiments]

Embodiments of the present invention are described below with reference to the drawings. In the following descriptions, like elements are given like reference numerals. Such like elements will be referred to by the same names, and have the same functions. Accordingly, detailed descriptions of such elements will not be repeated.

### [First Embodiment]

In the present embodiment, as an example of the cooking appliance according to the present invention, the heat-retaining pot set 1 is described as an example. The heat-retaining pot set 1 has a heat-retaining pot (pot) 2 and a pot stand 3.

The heat-retaining pot 2 has a vacuum insulating structure, and can keep the contents warm for a long time. The heat-retaining pot 2 according to the present embodiment can also be directly heated by a heating means such as a direct fire or an electromagnetic cooker. Therefore, the heat-retaining pot 2 can be used alone for cooking. In addition, by placing the ingredients in the heat-retaining pot 2 and heating them for a short time by a direct fire or the like, and then stopping the heating, it is possible to cook the ingredients at a low temperature by preheating.

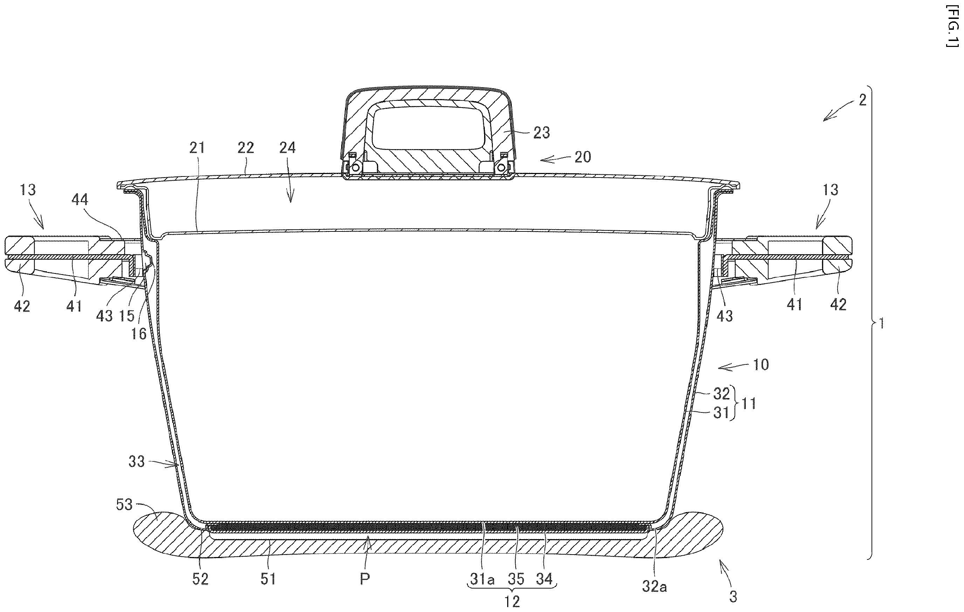

The pot stand 3 is mainly used as a mounting table for mounting the heat-retaining pot 2 after heating of the heat-retaining pot 2 is finished. As shown in FIG. 1, in a state where the heat-retaining pot 2 is set correctly with respect to the pot stand 3, the bottom surface portion 12 of the pot stand 3 is located on the concave portion 51 of the pot stand 3. By using such a pot stand 3, it is possible to further improve the heat retaining property of the heat-retaining pot 2, and it is possible to protect a mounting surface such as a table or a cooking table on which the heat-retaining pot 2 is placed.

### <Construction of Heat-retaining Pot>

Next, the overall configuration of the heat-retaining pot 2 is described with reference to FIG. 1. FIG. 1 shows the configuration of the heat-retaining pot 2 and the pot stand 3 constituting the heat-retaining pot set 1.

In this specification, when expressing the upper part of the heat-retaining pot 2 or the upward of the heat-retaining pot 2, it means the upper part or the upward of the heat-retaining pot 2 when the heat-retaining pot 2 is placed in a normal use state. Similarly, the expression "lower part or lower part of the heat-retaining pot 2 " shall mean the lower part or lower part of the heat-retaining pot 2 when the heat-retaining pot 2 is placed in a normal use state.

The heat-retaining pot 2 is configured mainly from a pot body 10 and a lid portion 20. Various ingredients to be cooked are put into the pot body 10. The lid portion 20 is placed on the upper part of the pot body 10. As shown in FIG. 1, when the lid portion 20 is placed on the pot body 10, the opening of the upper part of the pot body 10 is closed, the interior of the pot body 10 becomes a closed space. This makes it possible to keep the contents of the pot body 10 warm.

Here, the side surface or side portion of the pot body 10 means a portion positioned laterally when the pot body 10 is placed in a state of normal use. The bottom surface or bottom of the pot body 10 means a portion located below (lower surface) when the pot body 10 is placed in normal use.

The pot body 10 is configured mainly from a side surface portion (side surface) 11, a bottom surface portion (bottom surface) 12, and a handle portion 13 and the like. The handle portion 13 is provided one by one at a position facing each other.

The lid portion 20 is configured mainly from an inner surface member 21, an outer surface member 22, a gripping portion 23, and a heat insulating material 24 and the like.

The side surface portion 11 of the pot body 10 is configured mainly from an inner container 31 constituting an inner surface and an outer surface member 32. The inner container 31 is obtained by molding one metal plate (e.g., stainless steel (specifically, such as SUS304, SUS430)) into the shape of the container. The outer surface member 32 is provided so as to cover the outer peripheral portion of the side surface of the inner container 31. The outer surface member 32 is obtained by molding a cylindrical metallic material (e.g., stainless steel (specifically, such as SUS304, SUS430)). The outer surface member 32, in a state of being spaced apart by a predetermined distance from the outer peripheral surface of the inner container 31, is welded to the inner container 31. As described above, the side surface portion 11 has a double structure of a part (side surface portion) of the inner container 31 and the outer surface member 32.

A space 33 is formed between the inner container 31 and the outer surface member 32. The inner container 31 and the outer surface member 32, at the upper end of the pot body 10 forming the opening of the container, are welded. Further, the inner container 31 and the outer surface member 32, at the boundary portion between the bottom surface portion 12, are welded connected. In the state at the time of product completion, the space 33 is a sealed space and forms a vacuum heat insulating layer.

A recess 16 is formed in the outer surface member 32 of the side surface portion 11. The recess 16 is located upward of the pot body 10. Here, the upward of the pot body 10 means a height of more than half the distance from the bottom surface portion 12 to the upper end in the side surface portion 11. In the present embodiment, the position at which the recess 16 is formed corresponds to the position at which the handle portion 13 is attached.

In a substantially central portion of the recess 16, the exhaust hole (not shown) is formed. Exhaust holes are used to exhaust air in space 33 when forming a vacuum insulation layer in space 33.

Inside the recess 16, the sealing portion 15 for holding the vacuum insulating layer is disposed. The sealing portion 15 is formed of a brazing material or the like which melts at a high temperature. The brazing material can be formed using vacuum brazing technology or the like which has been conventionally performed. By the exhaust hole is blocked by the sealing portion 15, it is possible to form a vacuum insulating layer in the space 33.

A getter, not shown, is disposed in the space 33. The getter is used to adsorb the gas remaining in the space 33 and the gas discharged from the metal material to maintain the degree of vacuum in the space 33. The getter is formed of a titanium alloy or a zirconium alloy or the like, and is disposed at any position in the space 33.

As a method of forming a vacuum heat insulating layer in the space 33, for example, it is possible to adopt a method in which the pot body 10, which has the space 33 inside and the side surface portion 11 that exhaust holes are formed, is placed inside an exhaust furnace and the inside of the exhaust furnace is brought into a predetermined vacuum state. Thereafter, the brazing material serving as the material of the sealing portion 15 is heated to a temperature equal to or higher than the melting point to be melted, and the brazing material enters the exhaust hole. The brazing material that has penetrated into the exhaust hole seals the inside of the peripheral wall of the exhaust hole by the capillary phenomenon. Thereafter, by cooling the exhaust furnace, the brazing material is solidified, a vacuum heat insulating layer is formed in the space 33.

The bottom surface portion 12 has a three-layer structure of a first metal layer 31a, a second metal layer 34, and an intermediate metal layer 35. The bottom surface portion 12 having such a three-layer structure can be formed of, for example, a cladding material. The bottom surface portion 12 having such a three-layer structure of metal layers has heat storage properties. Thus, the heat inside the pot body 10 can be configured to hardly escape from the bottom surface portion 12.

The first metal layer 31a is located at the uppermost portion of the bottom surface portion 12. The first metal layer 31 constitutes the inner surface of the container of the pot body 10. In the present embodiment, the first metal layer 31a is formed by the bottom portion of the inner container 31. The second metal layer 34 is located at the lowermost portion of the bottom surface portion 12. The second metal layer 34 constitutes the outer surface of the container of the pot body 10. The second metal layer 34 has a contact surface with a heat source such as a gas stove, an electromagnetic cooker, or the like. In other words, the bottom surface portion 12 has a heated portion.

Incidentally, around the bottom surface portion 12, the outer peripheral portion 32a formed by the lower end portion of the side surface portion 11 is provided. As described later, when placing the heat-retaining pot 2 on the pot stand 3, the outer peripheral portion 32a is in contact with the contact portion 52 of the pot stand 3.

The intermediate metal layer 35 is located between the first metal layer 31a and the second metal layer 34. The thickness of the intermediate metal layer 35 is thicker than the thickness of each of the first metal layer 31a and the second metal layer 34.

As described above, the first metal layer 31a, which is part of the inner container 31, and the second metal layer 34 are respectively obtained by forming a single metal plate into a predetermined shape. The first metal layer 31a is preferably formed of a metal plate having high corrosion resistance. As a result, rust hardly occurs on the inner surface of the inner container 31. The first metal layer 31a is preferably formed of a metal plate having good workability. As a result, even if bending or the like having a large curvature is performed, cracking or the like does not easily occur. Preferably, the first metal layer 31a is, for example, formed of a metal plate made of austenitic stainless steel. The second metal layer 34 is preferably formed of a metal plate having magnetism. Thus, it is possible to configure the pot body 10 suitable for the use of the electromagnetic cooker. Preferably, the second metal layer 34 is, for example, formed of a metal plate made of ferritic stainless steel or a metal plate made of martensitic stainless steel. The intermediate metal layer 35 is formed of, for example, aluminum, an aluminum alloy, or the like. As described above, it is preferable that the first metal layer 31a, the second metal layer 34, and the intermediate metal layer 35 are made of materials different from each other. The first metal layer 31a and the second metal layer 34 may be formed of the same material.

As shown in FIG. 1, the bottom surface portion 12 is located slightly below the position of the lowermost end of the side surface portion 11. As a result, when the pot body 10 is placed on a flat surface, the bottom surface portion 12 (specifically, the second metal layer 34) comes into contact with the flat surface. Therefore, for example, such as an IH cooker, when placing the heat-retaining pot 2 on the cooker heating portion having a flat shape, the bottom surface portion 12 which is the heated portion is in contact with the heated cooker.

The bottom surface portion 12 is obtained by forming the intermediate metal layer 35 on the outer surface of the first metal layer 31a located on the bottom surface of the inner container 31, and then forming the second metal layer 34 on the surface of the intermediate metal layer 35. Further, the intermediate metal layer 35, after welding the outer surface member 32 constituting the side surface portion 11 to the outer peripheral surface of the inner container 31, is formed on the outer surface of the first metal layer 31a. The intermediate metal layer 35 is covered with the first metal layer 31a, the second metal layer 34, and the outer peripheral portion 32a of the outer surface member 32. This makes it difficult for heat to escape from the intermediate metal layer 35.

The handle portion 13, as a main component member, has a support member 41, a gripping portion 42, a connecting portion 43, and a cover member 44 and the like.

The support member 41 is formed by bending a single metal plate. The support member 41 is connected to the pot body 10 via the connecting portion 43. The connecting portion 43, for example, by welding, is connected to the outer surface member 32. The gripping portion 42 is attached to the support member 41. The gripping portion 42 forms a handle. The gripping portion 42 is preferably formed of a material having a relatively low thermal conductivity, such as wood or plastic resin, for example.

The cover member 44 is arranged so as to cover the connecting portion between the pot body 10 and the handle portion 13. Thus, in the state of the finished product of the pot body 10, the connecting portion 43 constituting the handle portion 13, and a connection part with the connecting portion 43 in the support member 41 are not to be visible from the outside. This improves the aesthetics of the heat-retaining pot 2. In addition, the connecting portion between the pot body 10 and the handle portion 13 can be protected.

Incidentally, the recess 16 and the sealing portion 15 are disposed at a mounting position of one of the handle portions 13. That is, the sealing portion 15 welded to the exhaust hole of the pot body 10 is covered with the cover member 44. As a result, when the bottom surface portion 12 of the pot body 10 is heated by a direct fire or the like, the sealing portion 15 is shielded from the heat source, and the temperature rise of the sealing portion 15 can be suppressed. In addition, since the sealing portion 15 is covered with the cover member 44, the sealing portion 15 can be protected from external shock or the like.

### <Composition of Lid>

Next, a more specific configuration of the lid portion 20 is described. As described above, the lid portion 20 is configured mainly from the inner surface member 21, the outer surface member 22, the gripping portion 23, the heat insulating material 24 and the like.

The inner surface member 21 constitutes the lower surface of the lid portion 20. The outer surface member 22 constitutes the upper surface of the lid portion 20. As shown in FIG. 1, between the inner surface member 21 and the outer surface member 22, a heat insulating layer having a predetermined thickness is formed. The heat insulating material 24 is inserted into the heat insulating layer. By the heat insulating material 24 is provided, when placing the lid portion 20 on the pot body 10, it is possible to increase the thermal insulation of the container interior of the heat-retaining pot 2.

The gripping portion 23 is attached to a substantially central portion of the outer surface member 22. The gripping portion 23 is preferably formed of a material having a relatively low thermal conductivity.

### <Composition of Pot Stand>

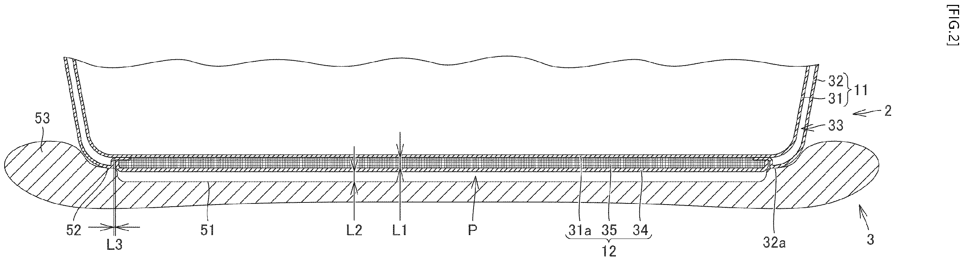

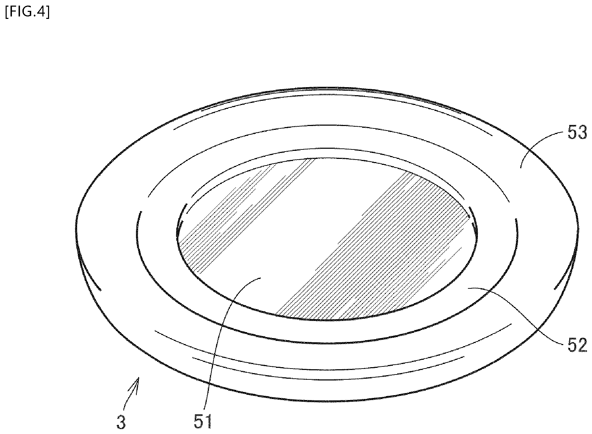

Next, a more specific configuration of the pot stand 3 is described. FIG. 2 shows an enlarged view of the lower part of the heat-retaining pot set 1. FIG. 4 shows the appearance of the pot stand 3.

The pot stand 3 is preferably formed of a material having heat resistance, such as wood or a heat-resistant plastic resin, and relatively low heat conductivity. The pot stand 3 can be formed of, for example, wood, heat-resistant plastic resin, or the like.

As shown in FIG. 4, the pot stand 3 has a substantially disk shape. However, the outer shape of the pot stand may be appropriately changed in accordance with the shape of the heat-retaining pot used together with the pot stand. The pot stand 3 has a concave portion 51, a contact portion 52, an outer wall portion 53, and the like.

The concave portion 51 is formed in the central portion of one surface of the pot stand 3 having a substantially disk shape. The surface in which the concave portion 51 is formed is the opposing surface with the bottom surface portion 12 of the heat-retaining pot 2. The inner diameter of the concave portion 51 (diameter if the concave portion 51 is circular) can be appropriately determined in accordance with the diameter of the bottom surface portion 12 of the heat-retaining pot 2 (diameter if the bottom surface portion 12 is circular).

The contact portion 52 is formed around the concave portion 51. The contact portion 52 is formed at a position higher than the concave portion 51 by one step. In the pot stand 3 according to the present embodiment, the contact portion 52 is formed on the entire outer periphery of the concave portion 51.

As shown in FIGS. 1 and 2, in a state where the heat-retaining pot 2 is correctly placed on the pot stand 3, the outer peripheral portion 32a located around the bottom surface portion 12 of the heat-retaining pot 2 is mainly in contact with the contact portion 52 of the pot stand 3. That is, the width of the outer peripheral portion 32a (diameter) can be appropriately determined in accordance with the dimensions of the outer peripheral portion 32a of the heat-retaining pot 2. Thus, when placing the heat-retaining pot 2 on the pot stand 3, the contact portion 52 of the pot stand 3 is in contact with the bottom surface of the heat-retaining pot 2 at a position other than the bottom surface portion 12, which is the heated portion.

The outer wall portion 53 is formed on the outermost periphery of the pot stand 3. The outer wall portion 53 is formed over the entire outer periphery of the pot stand 3. The outer wall portion 53 is a convex portion formed to protrude from the contact portion 52. In the present embodiment, the convex portion has a shape that rises while being smoothly curved. Since the outer wall portion 53 has such a shape, it is possible to improve the design property of the pot stand 3. Further, by the outer wall portion 53 is in such a shape, when placing the heat-retaining pot 2 on the pot stand 3, it is possible to more easily guide the bottom surface portion 12 of the heat-retaining pot 2 to the concave portion 51.

However, the shape of the outer wall portion is not limited to this. In another embodiment of the present invention, the outer wall portion 53 may be a side wall standing generally perpendicular from the surface of the contact portion 52.

As described above, since the pot stand 3 has the concave portion 51 and the contact portion 52, when placing the heat-retaining pot 2 on the pot stand 3, the gap P is formed below the bottom surface portion 12 (specifically, the second metal layer 34). From the gap P is formed, it is possible to avoid that the bottom surface portion 12 is in contact with the surface of the concave portion 51, and it is possible to suppress the heat transfer between the pot stand 3 and the bottom surface portion 12. Therefore, when the heat-retaining pot 2 is kept away from a heat source such as a direct fire and then placed on the pot stand 3, it is possible to suppress the heat of the pot body 10 from escaping to the pot stand 3. That is, the gap P functions as an air insulation layer.

Even if spacing L2 of the gap P (air heat insulating layer), for example, is very small of about 0.5mm, as compared with the case where the bottom surface portion 12 is in contact with the surface of the concave portion 51, it is possible to improve the heat insulating performance of the heat-retaining pot 2. The size of the gap P can be, for example, in the range of 0.5mm or more and 5.0mm or less. The size of the gap P is preferably in the range of 2.5mm or more and 3.5mm or less. The size of the gap P, by within the range of 2.5mm or more and 3.5mm or less, as also shown in the Example, it is possible to further improve the heat insulating performance of the heat-retaining 2.

The outer wall portion 53 is formed on the outer periphery of the pot stand 3. This enables to suppress heat radiation from the periphery of the bottom surface portion 12 of the heat-retaining pot 2 when placing the heat-retaining pot 2 on the pot stand 3. Therefore, it is possible to improve the heat insulation performance of the heat-retaining pot 2. Further, the outer wall portion 53 is formed on the outer periphery of the pot stand 3. This enables to suppress the misalignment of the heat-retaining pot 2 when placing the heat-retaining pot 2 on the pot stand 3. Further, the outer wall portion 53 is formed on the outer periphery of the pot stand 3. This enables to hold the heat-retaining pot 2 in a more stable state when placing the heat-retaining pot 2 in the pot stand 3. Therefore, it is possible to reduce the possibility of falling down of the heat-retaining pot 2.

### <Contact Portion between the Bottom of the Heat-retaining Pot and Pot Stand>

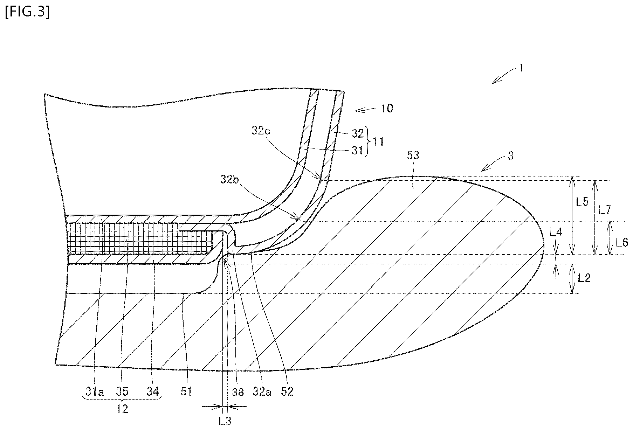

Subsequently, a more detailed configuration of the bottom surface portion 12 of the heat-retaining pot 2, and a more detailed configuration of the contact portion between the bottom surface portion 12 and the pot stand 3 of the heat-retaining pot 2 are described with reference to FIGS. FIG. 3 is an enlarged view of the outer peripheral portion of the lower portion of the heat-retaining pot set 1.

As shown in FIG. 3, in the lower surface of the heat-retaining pot 2, a small groove 38 is formed around the bottom surface portion 12 (heated portion).

Since such a groove 38 is formed, a configuration in which heat is hardly transmitted from the bottom surface portion 12 to the outer surface member 32 of the side surface portion 11 can be realized. Therefore, when placing the heat-retaining pot 2 on the pot stand 3, it is possible to further suppress the heat radiation from the bottom surface portion 12 to the side surface portion 11 in the heat-retaining pot 2. Further, since the groove 38 is formed, it is possible to form a slight gap between the bottom surface portion 12 of the heat-retaining pot 2 and the contact portion 52 of the pot stand 3. That is, when placing the heat-retaining pot 2 on the pot stand 3, the contact portion 52 of the pot stand 3 is in contact with the bottom surface of the heat-retaining pot 2 at a position other than the bottom surface portion 12. Here, the bottom surface portion 12 is the heated portion. Thus, when placing the heat-retaining pot 2 on the pot stand 3, it is possible to avoid the contact between the bottom surface portion 12 of the heat-retaining pot 2 and the pot stand 3. And heat dissipation from the bottom surface portion 12 of the heat-retaining pot 2 to the pot stand 3 can be more reliably suppressed.

Further, in the heat-retaining pot 2 according to the present embodiment, as shown in FIG. 3, the lowermost surface of the bottom surface portion 12 is located slightly below (e.g., at intervals L4 below) the height of the outer peripheral portion 32a located at the lower end of the side surface portion 11 of the heat-retaining pot 2.

In another aspect of the present invention, the bottom surface portion 12 and the outer peripheral portion 32a of the heat-retaining pot 2 may have substantially the same height. That is, the lower surface of the bottom surface portion 12, and the lower surface of the outer peripheral portion 32a may be substantially flush.

Further, in the pot stand 3 according to the present embodiment, the height L5 from the surface of the contact portion 52 to the top of the outer wall portion 53 is larger than the height L6 from the surface of the contact portion 52 to the bent vertex portion 32b of the outer surface member 32. Thus, the height to the top of the outer wall portion 53 is higher than the height L6 to the top of the bottom surface portion 12 (i.e., the bent vertex portion 32b). Therefore, when placing the heat-retaining pot 2 on the pot stand 3, it is possible to suitably suppress the heat dissipation from the periphery of the bottom surface portion 12. The height L5 is substantially the same as the height L7 from the surface of the contact portion 52 to the bending end portion 32c of the outer surface member 32. Thus, it is possible to suppress the outer wall portion 53 from hindering the operation when performing the operation of placing the heat-retaining pot 2 on the pot stand 3.

Incidentally, when the heating cooking using the heat-retaining pot 2, a water seal may be formed between the pot body 10 and the lid portion 20. When the heat-retaining pot 2 is moved away from the heat source, the temperature of the heat-retaining pot 2 gradually decreases. Due to temperature drop, or vibration transmitted from outside and the like, the water seal may become a water drop and flow downward along the side surface portion 11 of the pot body 10, so-called dew sag may occur.

Therefore, as shown in FIG. 3, when placing the heat-retaining pot 2 on the pot stand 3, it is preferable that a slight gap is formed between the surface of the outer wall portion 53 and the outer surface member 32 of the side surface portion 11 of the heat-retaining pot 2. As a result, the liquid such as water droplets descending on the side surface portion 11 of the pot body 10 enters the gap. Therefore, it is possible to suppress the liquid such as water droplets from moving up the outer wall portion 53 and flowing outward.

### (Summary of the First Embodiment)

As described above, the heat-retaining pot set 1 according to the present embodiment is composed of the heat-retaining pot 2 and the pot stand 3. The heat-retaining pot 2 has a vacuum heat insulating structure in the side surface portion 11. The bottom surface portion 12 of the heat-retaining pot 2 has a heated portion. The heated portion has a plurality of metal layers of different types, such as the three-layer structure of the metal layers described above, for example. Thus, the heated portion serves as a heat storage material.

The pot stand 3 has the concave portion 51 in the central portion of the opposing surface with the bottom surface portion 12 of the heat-retaining pot 2. The pot stand 3 has the contact portion 52 with the bottom surface portion 12 of the heat-retaining pot 2 around the concave portion. The contact portion 52 is provided over the entire periphery of the concave portion 51. Thus, when placing the heat-retaining pot 2 on the pot stand 3, the entire outer periphery of the bottom surface portion 12 of the heat-retaining pot 2 (specifically, the outer peripheral portion 32a) is in contact with the contact portion 52. Then, by means of the concave portion 51 of the pot stand 3 and the bottom surface portion 12 of the heat-retaining pot 2, a sealed space (i.e., the gap P) is formed.

According to the heat-retaining pot set 1 according to the present embodiment, the sealed space formed by the concave portion 51 and the bottom surface portion 12 (i.e., the gap P) becomes an air heat insulating layer, and it is possible to suppress the heat radiation from the bottom surface portion 12 of the heat-retaining pot 2. Therefore, by placing the heat-retaining pot 2 after heating on the pot stand 3, it is possible to improve the heat retaining performance of the heat-retaining pot stand 2.

In addition, the pot stand 3 has a structure suitable for a place where the heat-retaining pot 2 is placed after heating. Therefore, by using the pot stand 3, it is possible to avoid placing the bottom surface portion 12 of the heat-retaining pot 2 directly on the surface of the table, the cooking table, or the like after the heating is finished, and it is possible to protect the table, the cooking table, or the like.

### [Second Embodiment]

Next, a Second embodiment of the present invention is described. The heat-retaining pot set 1 according to the Second embodiment differs from the First embodiment in the configuration of a pot stand 103, which is one of its components. The same configuration as that of the First embodiment can be applied to the configuration of the heat-retaining pot 2. Therefore, in the following description, the configuration of the pot stand 103 is mainly described.

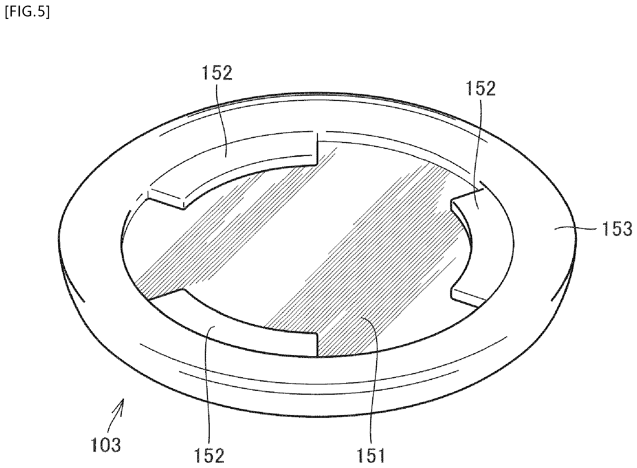

FIG. 5 shows an external appearance of a pot stand 103 used in the heat-retaining pot set 1 according to the Second embodiment. Similar to the First embodiment, the pot stand 103 can be formed of, for example, wood, heat-resistant plastic resin, or the like.

As shown in FIG. 5, the pot stand 103 has a substantially disk shape. The pot stand 103 has a concave portion 151, a contact portion 152, and an outer wall portion 153 and the like.

The concave portion 151 has the same configuration as that of the concave portion 51 of the First embodiment. That is, the concave portion 151 is formed in the central portion of one surface of the pot stand 103 having a substantially disk shape. The surface in which the concave portion 151 is formed is the opposing surface with the bottom surface portion 12 of the heat-retaining pot 2.

The contact portion 152 is formed at a position higher than the concave portion 151. Unlike the concave portion 51 of the First embodiment, the contact portion 152 is partially formed around the concave portion 151. In the pot stand 103 according to the present embodiment, three contact portions 152 are formed in a part of the outer periphery of the concave portion 151. Each contact portion 152 is disposed around the concave portion 51 at substantially equal intervals.

The number of the contact portions 152 is not limited to three. By providing two or more contact portions 152, the heat-retaining pot 2 can be placed in a stable state on the pot stand 103.

In a state where the heat-retaining pot 2 is correctly placed on the pot stand 103, the outer peripheral portion 32a located around the bottom surface portion 12 of the heat-retaining pot 2 is mainly in contact with the contact portion 152 of the pot stand 103.

Outer wall portion 153 is formed on the outermost periphery of the pot stand 103. Outer wall portion 153 is formed over the entire outer periphery of the pot stand 103. The shape of the outer wall portion 153 is the same as the shape of the outer wall portion 53 of the First embodiment.

As described above, since the pot stand 103 has the concave portion 151 and the contact portion 152, when placing the heat-retaining pot 2 on the pot stand 103, the gap P is formed below the bottom surface portion 12 (specifically, the second metal layer 34). By forming the gap P, it is possible to avoid the bottom surface portion 12 is in contact with the surface of the concave portion 151, it is possible to suppress the heat transfer between the heat-retaining pot 2 and the pot stand 103. Therefore, when the heat-retaining pot 2 is kept away from a heat source such as a direct fire and then placed on the pot stand 103, it is possible to suppress the heat of the pot body 10 from escaping to the pot stand 103. That is, the gap P functions as an air insulation layer.

Further, by forming the outer wall portion 153 on the outer periphery of the pot stand 103, when placing the heat-retaining pot 2 on the pot stand 103, it is possible to suppress heat radiation from the periphery of the bottom surface portion 12 of the heat-retaining pot 2. Therefore, it is possible to improve the heat retaining performance of the heat-retaining pot 2. Further, by forming the outer wall portion 153 on the outer periphery of the pot stand 103, it is possible to suppress the misalignment of the heat-retaining pot 2 when placing the heat-retaining pot 2 on the pot stand 103. Further, by forming the outer wall portion 153 on the outer periphery of the pot stand 103, when placing the heat-retaining pot 2 on the pot stand 103, it is possible to hold the heat-retaining pot 2 in a more stable state. Therefore, it is possible to reduce the possibility of falling down of the heat-retaining pot 2 or the like.

As described above, in the pot stand according to one embodiment of the present invention, the contact portion does not necessarily have to be provided on the entire outer periphery of the concave portion. Like the pot stand 103 according to the Second embodiment, the contact portion 152 may be partially disposed around the concave portion 151.

### [Third Embodiment]

Next, Third embodiment of the present invention is described. The heat-retaining pot set 1 according to the Third embodiment differs from the First embodiment in the configuration of a pot stand 203, which is one of its components. The same configuration as that of the First embodiment can be applied to the configuration of the heat-retaining pot 2. Therefore, in the following description, the configuration of the pot stand 203 is mainly described.

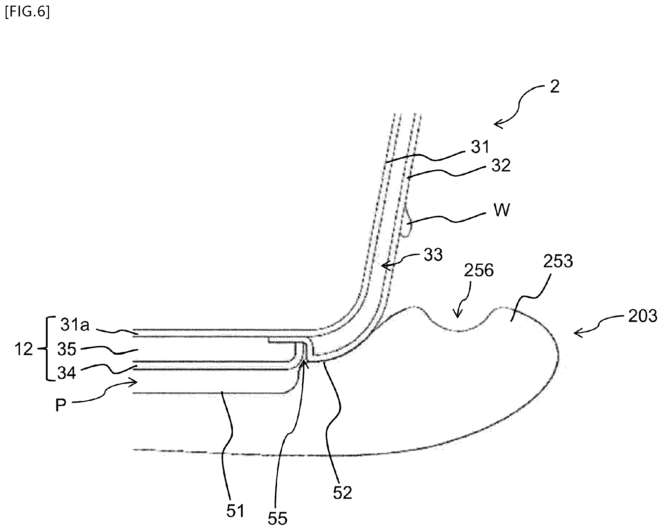

FIG. 6 is a schematic view showing an enlarged outer peripheral portion of the lower portion of the heat-retaining pot set according to the Third embodiment. The heat-retaining pot set according to the Third embodiment includes a heat-retaining pot 2 and a pot stand 203.

Similar to the First embodiment, the pot stand 203 has a substantially disk shape. The pot stand 203 has a concave portion 51, a contact portion 52, an outer wall portion 253, and the like. The concave portion 51 and the contact portion 52 can have the same configuration as that of the pot stand 3 of the First embodiment.

The outer wall portion 253 is formed on the outermost periphery of the pot stand 203. Similar to the pot stand 3 of the First embodiment, the outer wall portion 253 is formed over the entire outer periphery of the pot stand 203.

In the pot stand 203 according to the present embodiment, a dent portion 256 for dew receiving is formed at the top of the outer wall portion 253. The dent portion 256 is formed, for example, over the entire forming range of the outer wall portion 253, i.e., over the entire outer periphery of the pot stand 203.

Since the dent portion 256 is formed, water droplets W caused by a water seal or the like formed between the pot body 10 and the lid portion 20 can be received by the dent portion 256. Therefore, it is possible to more reliably suppress the liquid such as water drops descending on the side surface portion 11 of the pot body 10 from flowing outward by climbing over the outer wall portion 253.

### [Fourth Embodiment]

Next, Fourth embodiment of the present invention is described. The heat-retaining pot set 1 according to the Fourth embodiment differs from the First embodiment in the configuration of a heat-retaining pot 302, which is one of its components. The same configuration as that of the First embodiment can be applied to the configuration of the pot stand 3. Therefore, in the following description, the configuration of the heat-retaining pot 302 is mainly described.

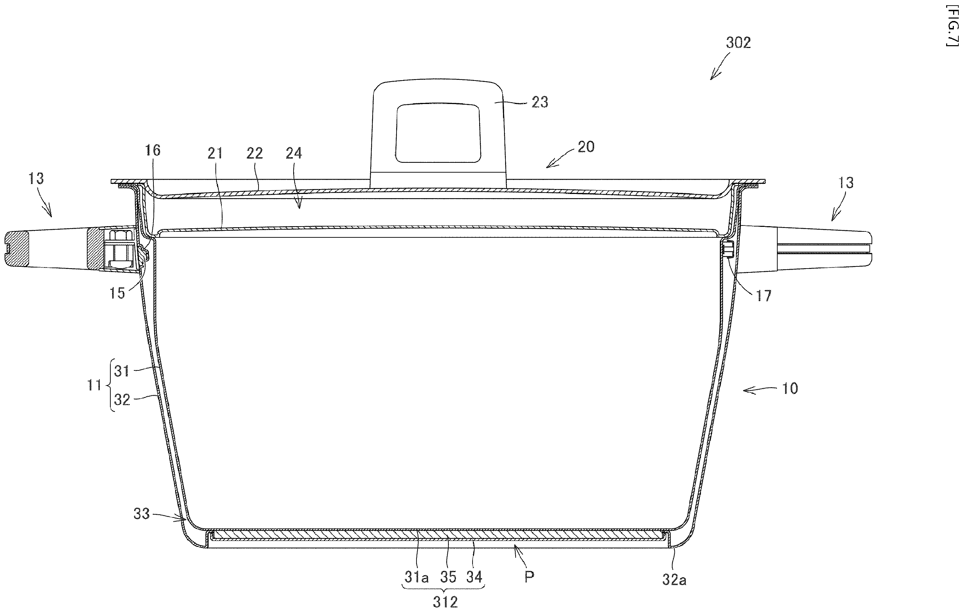

FIG. 7 shows the internal configuration of the heat-retaining pot 302 used in the heat-retaining pot set according to the Fourth embodiment. The heat-retaining pot 302 is mainly composed of the pot body 10 and the lid portion 20.

The pot body 10 is configured mainly from a side surface portion (side surface) 11, a bottom surface portion (bottom surface) 312, and a handle portion 13 and the like. The same configuration as that of the pot body 10 of the First embodiment can be applied to the side surface portion 11 and the handle portion 13.

As in the First embodiment, the bottom surface portion 312 has a three-layer structure of a first metal layer 31a, a second metal layer 34, and an intermediate metal layer 35. The bottom surface portion having such a three-layer structure can be formed of, for example, a cladding material. The second metal layer 34 is faced to a heat source such as a gas stove, an electromagnetic cooker. That is, the bottom surface portion 312 is a portion to be heated.

In the heat-retaining pot 2 according to the First embodiment, the bottom surface portion 12 is located slightly below the position of the lowermost end of the side surface portion 11 (see FIG. 2).

In contrast, in the heat-retaining pot 302 according to the present embodiment, the bottom surface portion 312 is located slightly above the position of the lowermost end of the side surface portion 11 (i.e., the outer peripheral portion 32a). Thus, in a state of placing the heat-retaining pot 302 on a plane, the gap P is formed below the bottom surface portion 312 (specifically, the second metal layer 34). Thus, it is possible to avoid the bottom surface portion 312 is in contact with the plane, it is possible to suppress the heat transfer between the plane and the bottom surface portion 312. That is, the gap P functions as an air insulation layer.

It is preferable that the depth of the concave portion 51 (i.e., L2+L4 (see FIG. 3)) is shallower than the pot stand 3 used in the set with the heat-retaining pot 2 according to the First embodiment in the pot stand 3 used in the set with the heat-retaining pot 302 according to the present embodiment.

In this case, the thickness of the bottom surface portion 312 and the depth of the concave portion 51 can be designed, for example, so that the spacing of the gap P formed between the lower surface of the bottom surface portion 312 and the surface of the concave portion 51, for example, is the range of 0.5mm or more 5.0mm or less. The size of the gap P is preferably in the range of 2.5mm or more and 3.5mm or less. By making the size of the gap P within the range of 2.5mm or more and 3.5mm or less, it is possible to further improve the heat retaining performance of the heat-retaining pot 302.

Lid portion 20 is configured mainly from the inner surface member 21, the outer surface member 22, the gripping portion 23, and the heat insulating material 24 and the like. The same configuration as that of the lid portion 20 of the First embodiment can be applied to the lid portion 20.

### [EXAMPLES]

Hereinafter, the present invention is described in more detail with reference to examples. It should be noted that the following examples are illustrative only and do not limit the present invention.

### [Test 1]

In Test 1, using the heat-retaining pot set 1 according to the present embodiment, the heat retaining performance of the heat-retaining pot 2 was evaluated.

### (Test Methods)

Heat-retaining pot set 1 composed of heat-retaining pot 2 and pot stand 3 in which the spacing L2 (see FIG. 2) of the gap P (air insulating layer) was variously changed was used for the test. First, 4 liters of water was put into the pot body 10 of the heat-retaining pot 2, and the pot was heated to a boiling state (100° C.) by direct fire. Thereafter, the heat-retaining pot 2 was moved to the top of the pot stand 3. Then, the temperature of the hot water in the pot body 10 was measured.

The length (thickness) L2 of the gaps P was set to 1mm, 2mm, 3mm, 4mm, 5mm, and 6mm, respectively. As a comparative object, a test was also carried out in a set of heat-retaining pots in which the length (thickness) L2 was set to 0mm.

The results are shown in Table 1. Table 1 shows the result of measuring the temperature change from the end of heating to the elapse of 60 minutes at 10-minute intervals.

**[Table 1]**

| Measurement time(min.) | Length L2 of air insulation layer(mm) | | | | | | |
|---|---|---|---|---|---|---|---|
| | 0 | 1 | 2 | 3 | 4 | 5 | 6 |
| 0 | 100.0 | 99.9 | 99.9 | 100.0 | 99.8 | 99.8 | 99.9 |
| 10 | 98.8 | 98.8 | 98.8 | 98.8 | 98.7 | 98.8 | 98.7 |
| 20 | 97.2 | 97.4 | 97.5 | 97.6 | 97.4 | 97.5 | 97.4 |
| 30 | 95.4 | 96.0 | 96.1 | 96.2 | 96.0 | 96.1 | 96.1 |
| 40 | 93.8 | 94.5 | 94.6 | 94.8 | 94.7 | 94.7 | 94.7 |
| 50 | 92.3 | 93.1 | 93.4 | 93.5 | 93.3 | 93.3 | 93.4 |
| 60 | 90.9 | 91.8 | 92.1 | 92.3 | 92.0 | 92.0 | 92.0 |

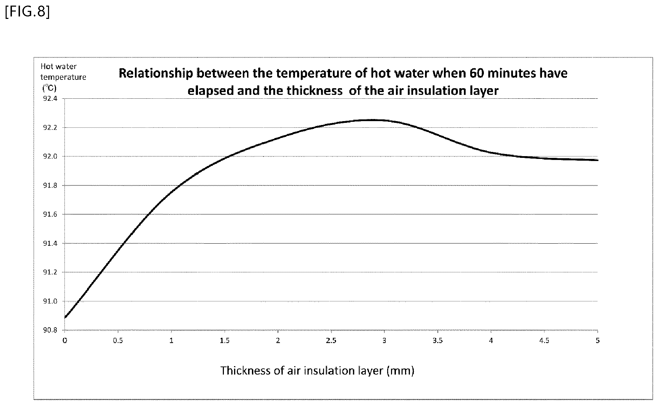

FIG. 8 is a graph plotting the hot water temperature (° C.) in the pot body 10 when the length (thickness) L2 of the gaps P was changed from 0mm to 5mm based on the results of Table 1. FIG. 8 is a graph showing the hot water temperature (° C.) when 60 minutes elapsed after the end of heating.

From the above results, it was confirmed that the heat-retaining pot set 1 in which the length L2 of the gap P was from 1mm to 6mm had improving heat retaining performance in comparison with the heat-retaining pot set of the comparative object in which the length L2 is 0mm. Further, referring to the graph of FIG. 8, when the length L2 of the gap P was in the range of 2.5mm or more and 3.5mm or less, it was confirmed that the heat retaining performance was superior.

### [Test 2]

In Test 2, using the heat-retaining pot set 1 according to the present embodiment, it was evaluated cooking performance of the heat-retaining pot 2.

### (Test Methods)

The heat-retaining pot sets 1 in which the length (thickness) L2 (see FIG. 2) of the gap P (air-insulated layer) was designed to 1mm or 3mm, respectively, were used for the test. First, 1.5 liters of water was put into the pot body 10 of the heat-retaining pot 2, and the pot was heated to 100° C. by an IH cooker. Thereafter, five pieces of carrots molded in the shape of 1.5mm square were put into each of the heat-retaining pots 2, and the lid portion 20 was used to cover the heat-retaining pots 2. Subsequently, each of the heat-retaining pots 2 was placed on the pot stand 3, and heat-retaining cooking was performed for 20 minutes. Thereafter, the carrot was taken out of the heat-retaining pot 2 and cooled with ice water for about 5 minutes.

Next, the texture of each carrot was measured. Specifically, the creep meter RE2-3305B manufactured by YAMADEN co.,ltd. was prepared. Using the creep meter, the maximum load required when a cooked product (carrot) was pierced by a plunger of 3mm in diameter was measured at a strain rate of 80% and a measuring speed of 1 mm/sec.

The measured results were processed to calculate the incubation cooking times required until the hardness of the cooked product (carrot) became 4N.

As a result, the time required for the hardness of carrot to become 4N was 16 minutes in the heat-retaining pot set 1 in which the length L2 of the gap P was 3mm. In contrast, the time required for the hardness of carrot to become 4N was 24.46 minutes in the heat-retaining pot set 1 in which the length L2 of the gap P was 1mm.

From the above results, in the case where the length L2 of the gap P was 3mm, as compared with the case where the length L2 of the gap P was 1mm, cooking performance was considered to be improved by about 35%.

The embodiments disclosed herein are to be considered in all respects as illustrative and not restrictive. The scope of the present invention is indicated by the appended claims rather than by the foregoing description, and is intended to include all modifications within the meaning and range of equivalents of the claims. In addition, configurations obtained by combining the configurations of the different embodiments described in this specification with each other are also included in the scope of the present invention.

### [Reference Signs List]

1 : Heat-retaining pot set
2 : Heat-retaining pot (pot)
3 : Pot stand
10 : Pot body
11 : Side surface portion
12 : Bottom surface portion (heated portion)
32a : Outer peripheral portion
38 : Groove
51 : Concave portion
52 : Contact portion
53 : Outer wall portion
103 : Pot stand
151 : Concave portion
152 : Contact portion
153 : Outer wall portion
203 : Pot stand
253 : Outer wall portion
256 : Dent portion
302 : Heat-retaining pot (pot)
312 : Bottom surface portion (heated portion)
P : Gap (air insulation layer)

## Claims

1. A pot stand for use in a pot having a heat-insulating structure and a heated portion on the bottom surface, comprising;
a concave portion provided in the center of the opposing surface with the pot; and
a contact portion with the bottom surface of said pot, wherein the contact portion is disposed around said concave portion.

2. The pot stand according to claim 1, further comprising an outer wall portion disposed on the outer periphery of the opposing surface with the pot.

3. The pot stand according to claim 1 or 2, wherein the contact portion is provided on the entire outer periphery of the concave portion.

4. A cooking appliance comprising;
the pot stand according to any one of claims 1 to 3; and
a pot having a heat-insulating structure.

5. The cooking appliance according to claim 4,
wherein the pot has a heated portion provided on the bottom surface of the pot, and
when the pot is placed on the pot stand, the contact portion of the pot stand is in contact with the bottom surface of the pot at a position other than the heated portion.

6. The cooking appliance according to claim 5, wherein a groove is formed around the heated portion, on the bottom surface of the pot.
